# EUROPEAN PATENT APPLICATION

(11) **EP 4 769 662 A1**
(43) Date of publication of application: **01.07.2026**
(21) Application number: 24857730.6
(22) Date of filing: 22.03.2024
(51) Int. Cl.: H01M 10/6556, H01M 10/6568

(54) **BATTERY COOLING PLATE, CHEMICAL COMPARTMENT OF VEHICLE BODY, VEHICLE BODY, AND VEHICLE**

(30) Priority: 31.08.2023 CN 202322374390 U; 08.09.2023 CN 202322452910 U
(71) Applicant: Contemporary Amperex Intelligence Technology (Shanghai) Limited, Shanghai 201306 (CN)
(72) Inventor: ZHANG, Xiaoping, Shanghai 201306 (CN); HU, Guoliang, Shanghai 201306 (CN)
(74) Representative: Ziebig Hengelhaupt Intellectual Property Attorneys Patentanwaltskanzlei PartGmbB
(86) International application number: PCT/CN2024/083380
(87) International publication number: WO 2025/044178

(57) **Abstract**

Provided are a battery cooling plate (100), a chemical compartment (1000) of a vehicle body (2000), a vehicle body (2000), and a vehicle (3000). The battery cooling plate (100) includes: a plate body (10) provided with a flow channel (101) for circulating a heat exchange medium, and a reinforcement member (20) connected to the plate body (10) and at least configured to enhance strength of a region on the plate body (10) where the flow channel (101) is located.

## Description

### CROSS-REFERENCE TO RELATED APPLICATIONS

The present application claims priority to Chinese Patent Application No. "202322374390.6" filed on August 31, 2023 and Chinese Patent Application No. "202322452910.0" filed on September 08, 2023 and having a priority date of August 31, 2023, both of which are filed by CATL (Shanghai) Intelligent Technology Co., Ltd., and the entire contents of which are incorporated herein by reference.

### TECHNICAL FIELD

The present application relates to the technical field of cooling plates, and in particular, to a battery cooling plate, a chemical compartment of a vehicle body, a vehicle body, and a vehicle.

### BACKGROUND

In the related art, when a battery cooling plate is subjected to an impact such as stepping, hitting by an object, or a collision, a flow channel is likely to collapse, resulting in a decline or loss of a heat management function of the battery.

### SUMMARY

Embodiments of the present application provide a battery cooling plate, which can reduce the risk of collapse of a flow channel.

According to a first aspect, an embodiment of the present application provides a battery cooling plate, including: a plate body provided with a flow channel for circulating a heat exchange medium; and a reinforcement member connected to the plate body and at least configured to enhance strength of a region on the plate body where the flow channel is located.

In the above technical solution, the strength of the region on the plate body where the flow channel is located is enhanced by the reinforcement member, so as to improve overall impact resistance performance of the battery cooling plate, reducing the risk of plastic deformation of the battery cooling plate and the risk of collapse of the flow channel, thereby improving the stability of a heat management function.

In some embodiments, the plate body includes a to-be-impacted region, and the reinforcement member is correspondingly provided in the to-be-impacted region.

In the above technical solution, the reinforcement member is correspondingly provided in the to-be-impacted region, causing the reinforcement member to be capable of targeted enhancement of structural strength of the to-be-impacted region, resulting in a better effect of reducing the risk of collapse of the to-be-impacted region.

In some embodiments, the reinforcement member is provided in the flow channel and connected to a wall surface of the flow channel.

In the above technical solution, by connecting the reinforcement member to the wall surface of the flow channel, structural strength of the wall surface may be enhanced to reduce deformation, and when the wall surface of the flow channel is deformed, the reinforcement member may occupy a space in the flow channel to play a supporting role, so as to reduce further deformation of the wall surface of the flow channel, solving the problem of collapse of the flow channel, and thereby reducing the decline of the heat management function. The reinforcement member may also increase a heat exchange area relating to the heat exchange medium, thereby improving heat exchange efficiency.

In some embodiments, the plate body includes a first heat exchange region opposite a high temperature region of a chemical compartment and a second heat exchange region opposite a low temperature region of the chemical compartment, and the reinforcement member is provided in the flow channel of the second heat exchange region.

In the above technical solution, the heat exchange medium flowing into the first heat exchange region is more than the heat exchange medium flowing into the second heat exchange region, making a heat exchange capacity of the first heat exchange region stronger than that of the second heat exchange region, so that heat exchange efficiency relating to the high temperature region is higher than heat exchange efficiency relating to the low temperature region, facilitating reducing a temperature difference between the high temperature region and the low temperature region, thereby making a temperature distribution in the chemical compartment more uniform.

In some embodiments, the flow channel extends in a set direction, and a dimension of the reinforcement member perpendicular to the set direction is less than or equal to a dimension of the flow channel perpendicular to the set direction.

In the above technical solution, the dimension of the reinforcement member perpendicular to the set direction is equal to the dimension of the flow channel perpendicular to the set direction, so that two sides of the reinforcement member perpendicular to the set direction are both in contact with the wall surface of the flow channel, making the reinforcement member have more reliable support and reinforcement effects on the plate body. When the dimension of the reinforcement member perpendicular to the set direction is less than the dimension of the reinforcement member perpendicular to the set direction, on the premise of satisfying a requirement for strength, the space occupied by the reinforcement member in the flow channel may be reduced, thereby improving the heat exchange efficiency, and even if the plate body is deformed to some extent, which results in deformation of the dimension of the flow channel perpendicular to the set direction, the flow channel can retain a circulation capacity due to the support and limitation of the reinforcement member, thereby avoiding a loss of the heat management function.

In some embodiments, the flow channel extends in the set direction, and the reinforcement member has a channel passing through the reinforcement member in the set direction.

In the above technical solution, the heat exchange medium may also be circulated in the channel of the reinforcement member, and on the premise of the reinforcement member having a sufficiently large dimension perpendicular to the set direction to enhance the strength, a reduction in a circulation area of the flow channel may be reduced, so that the heat exchange medium circulated in the flow channel may be sufficient to satisfy a requirement for heat exchange.

In some embodiments, the reinforcement member includes a connection portion and a plurality of bent portions, the plurality of bent portions are arranged perpendicular to the set direction, the bent portion is provided with a channel groove on a side facing to the connection portion, the connection portion covers a groove opening of the channel groove to define the channel, and the connection portion is connected to a wall surface of the flow channel.

In the above technical solution, a structure formed by the bent portion and the connection portion has high pressure resistance, resulting in a better effect of enhancing the structural strength of the battery cooling plate, and simple molding, which is advantageous to reducing the production cost of the reinforcement member.

In some embodiments, the reinforcement member includes an outer circumferential wall and a partition wall, and the partition wall is provided in a space enclosed by the outer circumferential wall to partition the space enclosed by the outer circumferential wall into a plurality of channels.

In the above technical solution, the reinforcement member formed by matching of the outer circumferential wall and the partition wall has high pressure resistance, resulting in a better effect of enhancing the structural strength of the battery cooling plate, and simple molding, which is advantageous to reducing the production cost of the reinforcement member.

In some embodiments, the reinforcement member matches the wall surface of the flow channel through surface contact.

In the above technical solution, as the reinforcement member matches the wall surface of the flow channel through surface contact, on the one hand, connection strength and support stability between the reinforcement member and the plate body may be improved, resulting in a better effect of enhancing the structural strength of the battery cooling plate; and on the other hand, heat exchange between the reinforcement member and the plate body may be enhanced, thereby improving the heat exchange efficiency.

In some embodiments, the reinforcement member is of a corrosion-resistant material, or a corrosion-resistant material layer is provided on a surface of the reinforcement member.

In the above technical solution, the corrosion-resistant material is unlikely to react with the heat exchange medium, and the entire reinforcement member is of the corrosion-resistant material or the corrosion-resistant material layer is provided on the surface of the reinforcement member, so that the entire reinforcement member or an exposed part thereof is unlikely to react with the heat exchange medium, which is advantageous to improving the service life of the reinforcement member and the stability of structural reinforcement for the battery cooling plate.

In some embodiments, the reinforcement member includes a first thinned region connected to the wall surface of the flow channel.

In the above technical solution, the first thinned region has a small thickness, so that the reinforcement member can be connected to the wall surface of the flow channel through the region with the small thickness, making the connection more convenient and firm.

In some embodiments, the first thinned region is a notch groove provided on the reinforcement member, the reinforcement member has channels on two sides of the notch groove, and the notch groove is in communication with the channels on the two sides.

In the above technical solution, the notch groove may allow circulation of the heat exchange medium and is in communication with the channels on the two sides, so that the first thinned region for connecting to the plate body does not disturb the flow of the heat exchange medium, which is advantageous to improving the heat exchange efficiency.

In some embodiments, there are a plurality of reinforcement members, at least two reinforcement members each include a second thinned region, and the second thinned regions of the two reinforcement members are stacked.

In the above technical solution, the second thinned regions of the two reinforcement members are stacked, making overall structural strength of the plurality of reinforcement members stronger, resulting in a better effect of enhancing the structural strength of the battery cooling plate. Moreover, by stacking the second thinned regions, an overall thickness of an overlap region of the two reinforcement members may be reduced, so that the overlap region occupies a space more reasonably and thus is unlikely to interfere with other structures.

In some embodiments, the reinforcement member has a channel partially located in the second thinned region.

In the above technical solution, the second thinned region does not block the circulation of the heat exchange medium in the channel, so that the heat exchange medium inside the reinforcement member flows smoothly.

In some embodiments, the plate body includes a first plate body and a second plate body, the first plate body is provided with a groove on a side facing to the second plate body, the second plate body covers a groove opening of the groove to define the flow channel, and the reinforcement member is connected to the first plate body or the second plate body.

In the above technical solution, the flow channel is defined in a simple manner, facilitating the implementation of a complex communication structure of the flow channel and facilitating assembly of the reinforcement member.

According to a second aspect, an embodiment of the present application further provides a chemical compartment of a vehicle body, including the battery cooling plate described above.

According to a third aspect, an embodiment of the present application further provides a vehicle body, including the chemical compartment of a vehicle body described above.

In some embodiments, the battery cooling plate is a floor of the vehicle body.

In the above technical solution, the battery cooling plate is not only used for heat management, but also used as the floor of a passenger compartment, which is advantageous to reducing the number of components and parts of a vehicle, thereby reducing an occupied space and providing a larger space for mounting a battery cell, which is advantageous to improving the energy density. In addition, the battery cooling plate includes the reinforcement member for enhancing the strength, so that the battery cooling plate, when used as the floor of the passenger compartment, is not prone to the decline or loss of the heat management function due to an impact such as stepping from a foot or hitting by an object, thereby improving the service life and use experience of the vehicle.

According to a fourth aspect, an embodiment of the present application further provides a vehicle, including the vehicle body described above.

### DESCRIPTION OF DRAWINGS

FIG. 1 is a schematic structural diagram of a battery cooling plate according to an embodiment of the present application;
FIG. 2 is a top view of FIG. 1;
FIG. 3 is an exploded view of FIG. 1;
FIG. 4 is a sectional view in a direction shown by line A-A in FIG. 2;
FIG. 5 is an enlarged schematic structural diagram of a portion B shown by a circle in FIG. 4;
FIGS. 6-8 are schematic diagrams of partial structures of a first plate body and a reinforcement member according to an embodiment of the present application;
FIG. 9 is a schematic structural diagram of a reinforcement member according to a first embodiment of the present application;
FIG. 10 is a schematic structural diagram of a reinforcement member according to a second embodiment of the present application;
FIG. 11 is a schematic structural diagram of a reinforcement member according to a third embodiment of the present application;
FIG. 12 is a schematic structural diagram of stacked reinforcement members according to an embodiment of the present application;
FIG. 13 is a schematic structural diagram of one of the reinforcement members in FIG. 12;
FIG. 14 is an enlarged schematic structural diagram of a portion C shown by a circle in FIG. 13; and
FIG. 15 is a schematic diagram of a vehicle according to an embodiment of the present application.

Reference signs:
Chemical compartment 1000; vehicle body 2000; vehicle 3000;
battery cooling plate 100;
plate body 10; flow channel 101; to-be-impacted region 102; first segment 103; second segment 104; first plate body 11; groove 111; second plate body 12;
reinforcement member 20; channel 201; connection portion 21; bent portion 22; outer circumferential wall 23; partition wall 24; first thinned region 25; notch groove 251; second thinned region 26.

### DESCRIPTION OF EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by a person skilled in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the description of the present application are only used for describing specific embodiments and are not intended to limit the present application, and the terms "comprise", "have", and any variations thereof in the description and claims of the present application and the above description of the drawings are intended to cover a non-exclusive inclusion. The terms "first", "second", and the like in the description and claims of the present application or in the drawings are used to distinguish between different objects, and are not used to describe a specific sequence or a primary-secondary relationship.

The phrase "an embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be noted that, unless explicitly specified and defined otherwise, the terms "mount", "couple", "connect", and "attach" are to be understood in a broad sense. For example, the terms may indicate a fixed connection, a detachable connection, or an integral connection, and may indicate a direct connection or an indirect connection implemented via an intermediate medium, or internal communication between two elements. A person skilled in the art can understand specific meanings of these terms in the present application according to specific situations.

The term "and/or" in the present application is only an associative relationship for describing associated objects, indicating that three relationships may be present. For example, A and/or B may indicate three cases: presence of only A; presence of both A and B; and presence of only B. In addition, the symbol "/" in the present application generally represents an "or" relationship between associated objects.

In the embodiments of the present application, the same reference signs denote the same component, and a detailed description of the same component is omitted in different embodiments for sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

A battery may be used in, but is not limited by, an electric device such as a vehicle, a ship, or an aircraft, and the battery etc. may constitute a power supply system of the electric device, so as to ensure use safety and reliability of the electric device. For example, the electric device may be, but is not limited to, a vehicle, a mobile phone, a tablet computer, a notebook computer, a ship, a spacecraft, an electric toy, an electric tool, and the like. The vehicle may be a fuel vehicle, a gas vehicle, a new energy vehicle, or a rail vehicle, where the new energy vehicle may be a pure electric vehicle, a hybrid electric vehicle, a plug-in hybrid electric vehicle, an enhanced-range electric vehicle, a fuel cell electric vehicle, or the like.

A vehicle body refers to an arrangement form of various components constituting the entire vehicle body. For example, the vehicle body may include an upper vehicle body and a lower vehicle body. The upper vehicle body refers to a part of a vehicle for carrying people and goods, and may include, for example, a window, a door, a driver compartment, a passenger compartment, and the like. The lower vehicle body may include a front compartment assembly, a chemical compartment, and a rear floor assembly.

The front compartment assembly is configured to transmit a front collision load. For example, the front compartment assembly may include a front anti-collision beam, two front longitudinal beams, and two front torsion boxes, where front ends of the two front longitudinal beams are connected to two ends of the front anti-collision beam respectively, rear ends of the two front longitudinal beams are connected to the two front torsion boxes respectively, and the front torsion boxes are connected to the chemical compartment. When the vehicle is subjected to a collision, the front anti-collision beam can evenly bear an expansion load, and share the collision load with the corresponding two front torsion boxes through the two front longitudinal beams, so as to reduce damage to the passenger compartment.

The rear floor assembly is a mounting carrier of system parts such as interior and exterior decorations and electric appliances, and has important functions of carrying passengers, storing spare tires, and reducing damage to a fuel tank and injury to a passenger through deformation of the rear floor assembly during a rear collision. For example, the rear floor assembly may include a rear anti-collision beam, two rear longitudinal beams, two rear torsion boxes, a rear cross beam, and a rear floor, where rear ends of the two rear longitudinal beams are connected to two ends of the rear anti-collision beam respectively, front ends of the two rear longitudinal beams are connected to the two rear torsion boxes respectively, the rear torsion boxes are connected to a battery assembly, the rear cross beam is connected to the two rear torsion boxes, and a rear floor is mounted between the two rear longitudinal beams.

The chemical compartment refers to a physical module including one or more battery cells to provide a higher voltage and capacity. For example, the chemical compartment may include a compartment body for packaging one or more battery cells or battery modules. The compartment body can reduce or prevent an impact of a liquid or other foreign objects on charge or discharge of the battery cell. In addition, the compartment body may be configured to accommodate the battery cell, and may also be configured as being connected to the front compartment assembly and the rear floor assembly to act as a part of a structure of the vehicle body for load bearing and force transmission.

The battery cell may include a lithium-ion secondary battery, a lithium-ion primary battery, a lithium-sulfur battery, a sodium-lithium ion battery, a sodium-ion battery, a magnesium-ion battery, etc., which is not limited in the embodiments of the present application. The battery cell may be in a shape of a cylinder, a flat body, a cuboid, or the like, which is not limited in the embodiments of the present application. The battery cell is generally classified into three types according to a packaging manner: a cylindrical battery cell, a square battery cell, and a pouch battery cell, which is not limited in the embodiments of the present application.

For example, the battery cell may include a housing, an electrode assembly, and an electrolyte, where the housing is configured to accommodate the electrode assembly and the electrolyte. The electrode assembly includes a positive electrode sheet, a negative electrode sheet, and a separator. The battery cell works mainly relying on migration of metal ions between the positive electrode sheet and the negative electrode sheet.

During working of a battery, the battery needs to work in an appropriate temperature range, in which case the temperature of the battery needs to be adjusted. For example, heating for the battery at a low temperature or heat dissipation for the battery at a high temperature is performed through a battery cooling plate. The battery cooling plate may be provided in a case of the battery, outside the case of the battery, or as a part of the case of the battery, so as to implement heat exchange with the battery, and in particular, implement temperature adjustment for the battery cell, thus achieving a heat management function.

The battery cooling plate may be a press molding-type cooling plate, an inflation-type cooling plate, or the like. The press molding-type cooling plate is a battery cooling plate with a flow channel that is obtained by press molding a flow channel plate and a heat dissipation plate and then connecting them together through a process such as brazing after. The inflation-type cooling plate is a battery cooling plate with a flow channel that is obtained by introducing an inflation gas between two layers of plate bodies and then performing thermoplastic inflation molding on the plate bodies. For example, the battery cooling plate may include a flow channel plate and a heat dissipation plate, where a main part of the heat dissipation plate is a flat plate having a relatively large area, and having one flat surface abutting against and brazed to the flow channel plate and the other flat surface used to be adhered to a heat dissipation surface of the battery cell.

A heat exchange medium may pass through the flow channel of the battery cooling plate, and the heat exchange medium may be a cooling liquid, water, or the like. The heat exchange medium may exchange heat with the battery through a wall surface of the flow channel, so as to adjust the temperature of the battery.

If the battery cooling plate is subjected to an impact such as stepping, hitting by an object, or a collision with an external force, plastic deformation is likely to occur, and obvious plastic deformation may cause the flow channel to collapse, resulting in a decline or lose of the heat management function. For example, in some embodiments, the battery cooling plate is used as a bottom protection plate of the chemical compartment, the chemical compartment is used in a vehicle, and the bottom protection plate bears a collision with an external force from the bottom of the vehicle. For another example, in some embodiments, the chemical compartment is used in a vehicle, and the battery cooling plate is used as an upper side of the battery and functions as a floor of the passenger compartment, where the battery cooling plate is often subjected to stepping from a passenger and hitting by an object. Although an upper part of the battery cooling plate may be carpeted for buffering, plastic deformation may still occur in the case of stepping with a strong force or hitting by a heavy object.

Based on this, the present application provides a battery cooling plate 100, including a plate body 10 and a reinforcement member 20. The plate body 10 is provided with a flow channel 101 for circulating a heat exchange medium, and the reinforcement member 20 is connected to the plate body 10 and at least configured to enhance strength of a region on the plate body 10 where the flow channel 101 is located.

In the battery cooling plate 100 with such a structure, at least the strength of the region on the plate body 10 where the flow channel 101 is located is enhanced by the reinforcement member 20, so as to improve overall impact resistance performance of the battery cooling plate 100, reducing the risk of plastic deformation of the region on the battery cooling plate 100 where the flow channel 101 is located and the risk of collapse of the flow channel 101, thereby improving the stability of a heat management function of a chemical compartment 1000.

The battery cooling plate 100 disclosed in the embodiments of the present application may be used in the chemical compartment 1000, where the chemical compartment 1000 may be used in a vehicle 3000, and the vehicle 3000 may be a fuel vehicle, a gas vehicle, a new energy vehicle, or a rail vehicle, where the new energy vehicle may be a pure electric vehicle, a hybrid electric vehicle, a plug-in hybrid electric vehicle, an enhanced-range electric vehicle, a fuel cell electric vehicle, or the like.

Hereinafter, a battery cooling plate 100 according to an embodiment of the present application is described with reference to the drawings.

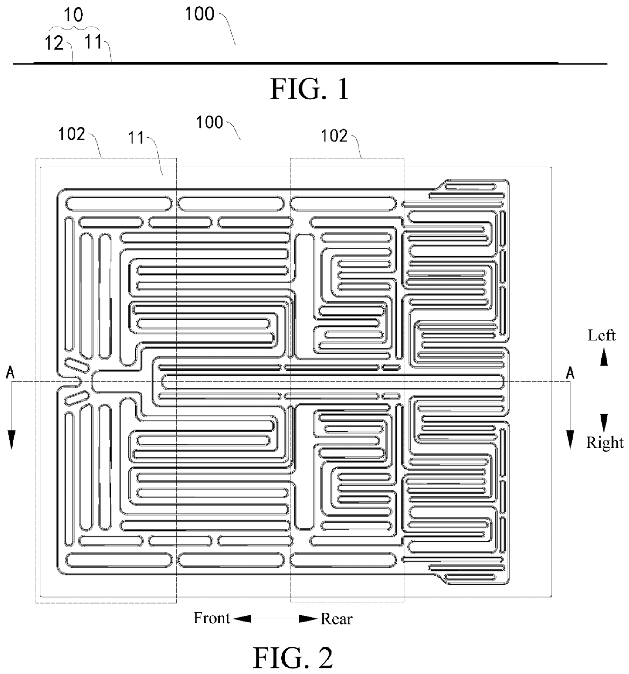

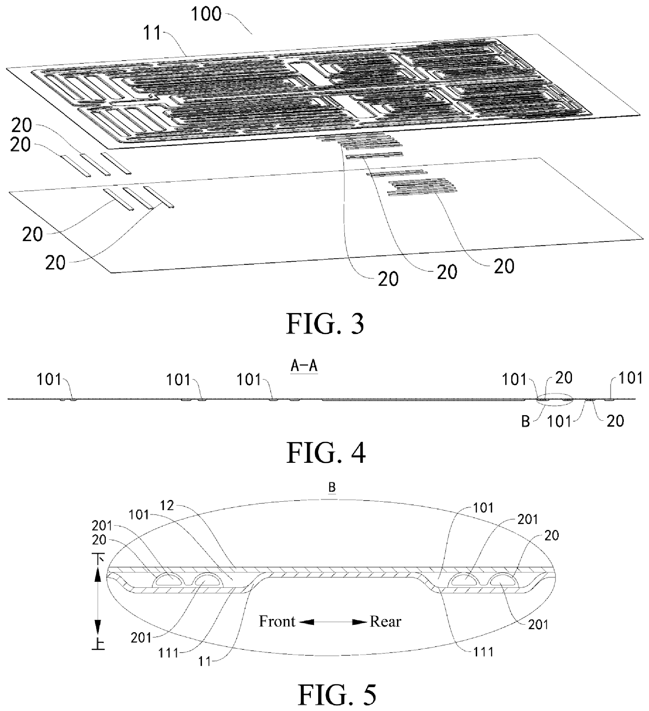

Referring to FIGS. 1-5, FIG. 1 is a schematic structural diagram of a battery cooling plate 100 according to an embodiment of the present application; FIG. 2 is a top view of FIG. 1; FIG. 3 is an exploded view of FIG. 1; FIG. 4 is a sectional view in a direction shown by line A-A in FIG. 2; and FIG. 5 is an enlarged schematic structural diagram of a portion B shown by a circle in FIG. 4. The battery cooling plate 100 includes a plate body 10 and a reinforcement member 20. The plate body 10 is provided with a flow channel 101 for circulating a heat exchange medium, and the reinforcement member 20 is connected to the plate body 10 and at least configured to enhance strength of a region on the plate body 10 where the flow channel 101 is located.

The plate body 10 defines the flow channel 101 through which the heat exchange medium can flow, so that the heat exchange medium exchanges heat with the chemical compartment 1000 through the plate body 10, achieving heat management of the chemical compartment 1000.

The reinforcement member 20 is connected to the plate body 10, and the reinforcement member 20 here may be provided outside the flow channel 101 or inside the flow channel 101 and connected to the plate body 10. The reinforcement member 20 may be directly provided in the region where the flow channel 101 is located or may be provided in a region near the region where the flow channel 101 is located, as long as the structural strength of the region on the plate body 10 where the flow channel 101 is located can be enhanced and the risk of the flow channel 101 collapsing due to plastic deformation of the plate body 10 can be reduced.

Certainly, according to a demand of resistance to plastic deformation of another region of the plate body 10, etc., the reinforcement member may also be provided in another region of the plate body 10 to enhance strength of the region of the plate body 10 where no flow channel 101 is located, which is also within the protection scope of the present application.

In addition, it should be noted that the reinforcement member 20 may enhance the strength of regions where all the flow channels 101 are located, or enhance the strength of regions where a part of flow channels 101 are located. For example, a position where the reinforcement member 20 is provided may be determined according to whether the region where the flow channel 101 is located is likely to be impacted, so as to reduce the amount of the reinforcement members 20 under the premise of enhancing the strength, thereby reducing the cost.

In some embodiments in which the reinforcement member 20 is provided outside the flow channel 101, by connecting the reinforcement member 20 to the plate body 10, the structural strength of the plate body 10 is enhanced, and the reinforcement member 20 may extend from a surface of the plate body 10 so that the reinforcement member 20 bears an impact force before the plate body 10, preventing the impact force from directly acting on a wall surface of a channel 201 to cause serious collapse of the channel 201. For example, the plate body 10 may be bent and extended so that a convex region of an outer surface corresponds to the flow channel 101 and a concave region corresponds to a region without the flow channel 101. The reinforcement member 20 may be connected to the concave region and have a height higher than that of the convex region, so that the reinforcement member 20, when impacted, buffers a force and then transmits the force to the region without the flow channel 101, and the impact force is unlikely to directly impact on the convex region, thereby effectively reducing deformation of the wall surface of the flow channel 101.

In an embodiment in which the reinforcement member 20 is provided in the flow channel 101 and connected to the wall surface of the flow channel 101, by connecting the reinforcement member 20 to the wall surface of the flow channel 101, the structural strength of the wall surface may be enhanced to reduce deformation, and when the wall surface of the flow channel 101 is deformed, the reinforcement member 20 may occupy a space in the flow channel 101 to play a supporting role, so as to reduce further deformation of the wall surface of the flow channel 101, solving the problem of collapse of the flow channel 101, and thereby reducing the decline of the heat management function. The reinforcement member 20 may also increase a heat exchange area relating to the heat exchange medium, thereby improving heat exchange efficiency.

A manner of connecting the reinforcement member 20 to the plate body 10 includes, but is not limited to, welding, clamping, riveting, and other connection manners. A manner of molding the reinforcement member 20 includes, but is not limited to, extrusion molding, bending molding, press molding, 3D printing molding, and the like. The shape of the reinforcement member 20 includes, but is not limited to, a plate, a tube, a frame, a mesh, and the like.

For the battery cooling plate 100 according to this embodiment of the present application, at least the strength of the region on the plate body 10 where the flow channel 101 is located is enhanced by the reinforcement member 20, so as to improve overall impact resistance performance of the battery cooling plate 100, reducing the risk of plastic deformation of the region on the battery cooling plate 100 where the flow channel 101 is located and the risk of collapse of the flow channel 101, thereby improving the stability of a heat management function of a chemical compartment 1000.

According to some embodiments of the present application, as shown in FIG. 2, the plate body 10 includes a to-be-impacted region 102, where the reinforcement member 20 is correspondingly provided in the to-be-impacted region 102.

The to-be-impacted region 102 is a region of the plate body 10 that is likely to be subjected to an impact force during use of the battery cooling plate 100. Taking the battery cooling plate 100 being used as a floor of a passenger compartment as an example, in the passenger compartment, a floor region excluding a central armrest box, a front seat, and a rear seat cushion is a foot stepping region and a region easily hit by a heavy object, that is, the to-be-impacted region 102 of the plate body 10.

The to-be-impacted region 102 has a higher risk of collapse of the flow channel 101 than other regions. The reinforcement member 20 is correspondingly provided in the to-be-impacted region 102, causing the reinforcement member 20 to be capable of targeted enhancement of structural strength of the to-be-impacted region 102, resulting in a better effect of reducing the risk of collapse of the to-be-impacted region 102. In regions other than the to-be-impacted region 102, the reinforcement member 20 may be provided according to actual needs to further enhance overall strength of the battery cooling plate 100, or no reinforcement member 20 may be provided to reduce the cost.

In some embodiments in which the reinforcement member 20 is provided in the flow channel 101, as shown in FIG. 4 and FIG. 5, the plate body 10 includes a first heat exchange region opposite a high temperature region of the chemical compartment 1000 and a second heat exchange region opposite a low temperature region of the chemical compartment 1000, where the reinforcement member 20 is provided in the flow channel 101 of the second heat exchange region.

For the chemical compartment 1000, different regions have different temperatures during working. For example, a region with a higher battery cell density has a higher temperature, and a region with fewer battery cells has a lower temperature. For another example, a region close to the center of the chemical compartment 1000 has a higher temperature, and a region close to the edge of the chemical compartment 1000 has a lower temperature. Certainly, a temperature difference distribution includes, but is not limited to above.

Providing the reinforcement member 20 in the flow channel 101 reduces an actual circulation area of the flow channel 101, reducing flow of the heat exchange medium to the region where the reinforcement member 20 is located, and thereby changing a flow distribution of the heat exchange medium in the entire battery cooling plate 100. By providing the reinforcement member 20 in the flow channel 101 of the second heat exchange region and providing no reinforcement member 20 in the flow channel 101 of the first heat exchange region, the heat exchange medium flowing into the first heat exchange region may be more than the heat exchange medium flowing into the second heat exchange region, making a heat exchange capacity of the first heat exchange region stronger than that of the second heat exchange region, so that heat exchange efficiency relating to the high temperature region of the chemical compartment 1000 is higher than heat exchange efficiency relating to the low temperature region of the chemical compartment 1000, facilitating reducing a temperature difference between the high temperature region and the low temperature region, thereby making a temperature distribution in the chemical compartment 1000 more uniform.

In addition, the reinforcement member 20 provided in the flow channel 101 may be in contact with the heat exchange medium, so that the reinforcement member 20 and the plate body 10 simultaneously exchange heat with the heat exchange medium, increasing a heat exchange area and thereby enhancing heat exchange.

According to some embodiments, referring to FIGS. 3-8, FIGS. 6-8 are schematic diagrams of partial structures of a first plate body 11 and the reinforcement member 20 according to an embodiment of the present application. The plate body 10 includes a first plate body 11 and a second plate body 12, the first plate body 11 is provided with a groove 111 on a side facing to the second plate body 12, the second plate body 12 covers a groove opening of the groove 111 to define the flow channel 101, and the reinforcement member 20 is connected to the first plate body 11 or the second plate body 12.

The first plate body 11 is provided with the groove 111 on the side facing to the second plate body 12, and a concave-convex structure may correspondingly be formed on a side of the first plate body 11 facing away from the second plate body 12, or the side may be a flat surface. For example, the first plate body 11 may be deformed by sheet metal machining, so as to form the groove 111 and a protrusion on one side, and form a convex portion corresponding to the position of the groove 111 and a concave portion corresponding to the position of the protrusion on the other side. The first plate body 11 is simple to mold, and the concave-convex structure functions as a reinforcement rib, so as to enhance overall structural strength of the first plate body 11.

The second plate body 12 covers the groove opening of the groove 111 to define the flow channel 101. The flow channel 101 is defined in a simple manner, facilitating the implementation of a complex communication structure of the flow channel 101 and facilitating assembly. In an assembly process, the first plate body 11 and the second plate body 12 may be first obtained by machining, then the reinforcement member 20 is connected to the first plate body 11 or the second plate body 12, and then the first plate body 11 is connected to the second plate body 12. Alternatively, the first plate body 11 and the second plate body 12 may be first obtained by machining, then the reinforcement member 20 is placed in the groove 111, and then the first plate body 11, the second plate body 12, and the reinforcement member 20 are connected.

Moreover, a large area of the second plate body 12 may be in the shape of a flat plate. On the one hand, it facilitates cooperative heat exchange between the second plate body 12 and the chemical compartment 1000, e.g., facilitates heat conduction contact between the second plate body 12 and a heat dissipation surface of a battery cell; and on the other hand, it facilitates the connection between the second plate body 12 and the first plate body 11. For example, the second plate body 12 and the first plate body 11 shown in FIG. 5 may be in surface contact, so as to increase an area of a connection region and enhance the structural strength of the plate body 10.

In some specific embodiments, the first plate body 11 may be formed as a flow channel 101 plate, and the second plate body 12 may be formed as a heat dissipation plate, where the heat dissipation plate is used to be in heat conduction contact with the battery cell of the chemical compartment 1000 to achieve heat exchange with the battery cell, thereby achieving heat exchange with the heat exchange medium.

In some embodiments of the present application, the flow channel 101 extends in a set direction, and a dimension of the reinforcement member 20 perpendicular to the set direction is less than or equal to a dimension of the flow channel 101 perpendicular to the set direction.

The flow channel 101 extending in the set direction means that the heat exchange medium in the flow channel 101 flows substantially in the set direction. It should be noted that the flow channels 101 in different regions on the plate body 10 may extend in different directions. For example, as shown in FIG. 2, the plate body 10 is substantially a rectangular plate with a length direction parallel to a front-rear direction and a width direction parallel to a left-right direction. Some flow channels 101 on the plate body 10 extend in the front-rear direction, some flow channels 101 extend in the left-right direction, some flow channels 101 oblique from front to rear and left, and some flow channels 101 oblique from front to rear and right. Certainly, the structure and extension direction of the flow channel 101 and the plate body 10 include, but are not limited to above.

The dimension of the reinforcement member 20 perpendicular to the set direction may be a dimension of the reinforcement member 20 in any direction perpendicular to the set direction, for example, a dimension in the thickness direction of the plate body 10. For example, in the regions shown in FIG. 4 and FIG. 5, the set direction is the left-right direction, and the dimension of the reinforcement member 20 perpendicular to the set direction is a dimension in the up-down direction or the front-rear direction. The dimension of the flow channel 101 perpendicular to the set direction refers to a dimension in a state where the plate body 10 is not deformed.

The dimension of the reinforcement member 20 perpendicular to the set direction is equal to the dimension of the flow channel 101 perpendicular to the set direction, so that two sides of the reinforcement member 20 perpendicular to the set direction are both in contact with the wall surface of the flow channel 101, making the reinforcement member 20 have more reliable support and reinforcement effects on the plate body 10. As the dimension of the reinforcement member 20 perpendicular to the set direction is less than the dimension perpendicular to the set direction, on the premise of satisfying a requirement for strength, the space occupied by the reinforcement member 20 in the flow channel 101 may be reduced, thereby improving the heat exchange efficiency, and even if the plate body 10 is deformed to some extent, which results in deformation of the dimension of the flow channel 101 perpendicular to the set direction, the flow channel 101 can retain a circulation capacity due to the support and limitation of the reinforcement member 20, thereby avoiding a loss of the heat management function.

According to some embodiments of the present application, as shown in FIG. 5 and FIGS. 9-11, FIGS. 9-11 are schematic structural diagrams of the reinforcement member 20 according to first to third embodiments of the present application. The flow channel 101 extends in the set direction, and the reinforcement member 20 has a channel 201 passing through the reinforcement member in the set direction.

In other words, the heat exchange medium may also be circulated in the channel 201 of the reinforcement member 20, and on the premise of the reinforcement member 20 having a sufficiently large dimension perpendicular to the set direction to enhance the strength, a reduction in a circulation area of the flow channel 101 may be reduced, so that the heat exchange medium circulated in the flow channel 101 may be sufficient to satisfy a requirement for heat exchange.

It should be noted that the channel 201 may extend in the set direction, extend obliquely at an angle with respect to the set direction, extend in a path such as an arc or a curve, etc. The channel 201 passing through the reinforcement member in the set direction means that an inlet of the channel 201 is located on an upstream side of an outlet of the channel 201 in the set direction, so that the heat exchange medium in the flow channel 101 may enter the channel 201 from the inlet of the channel 201 and then flow out from the outlet, resulting a small resistance to the heat exchange medium flowing through the channel 201.

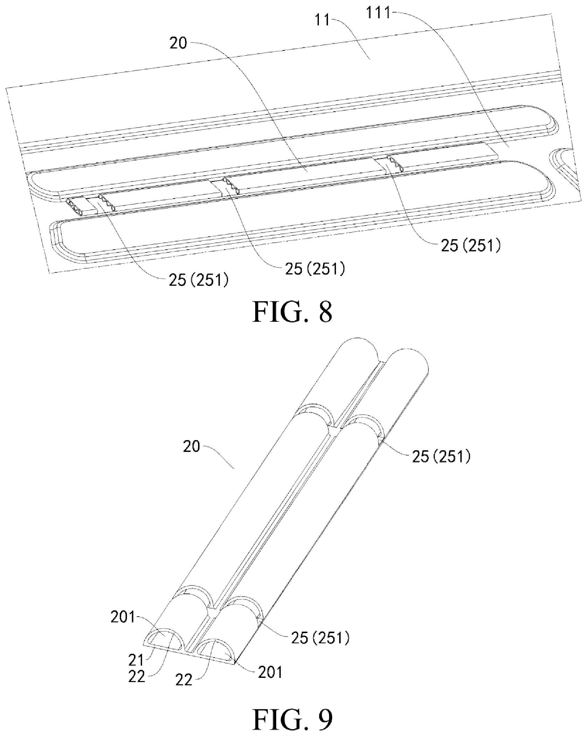

The specific structure of the channel 201 defined in the reinforcement member 20 may be set flexibly. For example, in some embodiments, as shown in FIG. 5 and FIG. 9, FIG. 9 is a schematic structural diagram of the reinforcement member 20 according to the first embodiment of the present application. The reinforcement member 20 includes a connection portion 21 and a plurality of bent portions 22, the plurality of bent portions 22 are arranged perpendicular to the set direction, the bent portion 22 is provided with a channel groove on a side facing to the connection portion 21, the connection portion 21 covers a groove opening of the channel groove to define the channel 201, and the connection portion 21 is connected to a wall surface of the flow channel 101.

The bent portion 22 indicates that the plate extends along a non-flat surface, making a side surface of the bent portion 22 facing to the connection portion 21 include a concave region to define the channel groove. For example, as shown in FIG. 5 and FIG. 9, the bent portion 22 is an arc-shaped plate, and the channel groove is a semi-cylindrical groove.

The connection may be in any shape such as a flat plate or an arc-shaped plate. The connection portion 21 is connected to the wall surface of the flow channel 101. They may be in point contact, surface contact, or line contact, and connected by welding, clamping, riveting, etc. The connection portion 21 and the bent portion 22 may be integrally molded or connected by welding, etc.

The plurality of bent portions 22 are arranged perpendicular to the set direction, so that a plurality of channel grooves are arranged perpendicular to the set direction. Accordingly, a plurality of formed channels 201 are arranged perpendicular to the set direction, for example, arranged in the front-rear direction as shown in FIG. 5. The heat exchange medium may flow into the plurality of channels 201 simultaneously, thereby improving the heat exchange effect. By adjusting the number of the bent portions 22, the number of the formed channels 201 and the dimension of the reinforcement member 20 may be adjusted, thereby improving the adaptability of the reinforcement member 20.

In addition, a structure formed by the bent portion 22 and the connection portion 21 has high pressure resistance, resulting in a better effect of enhancing the structural strength of the battery cooling plate 100, and simple molding, which is advantageous to reducing the production cost of the reinforcement member 20.

In the above embodiment, a manner of molding the connection portion 21 and the bent portion 22 is not limited, for example, they may be separately molded by machining and then connected together by welding, etc., or may be integrally molded by extrusion molding, etc.

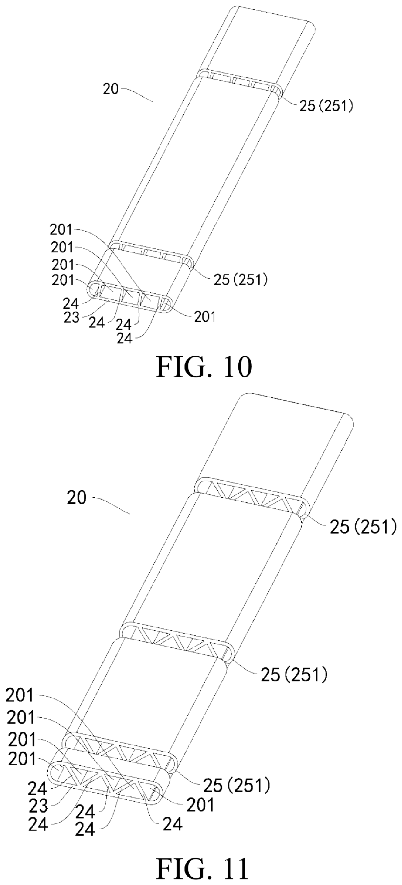

In some other embodiments, referring to FIG. 10 and FIG. 11, FIG. 10 and FIG. 11 are schematic structural diagrams of the reinforcement member 20 according to the second and third embodiments of the present application. The reinforcement member 20 includes an outer circumferential wall 23 and a partition wall 24, and the partition wall 24 is provided in a space enclosed by the outer circumferential wall 23 to partition the space enclosed by the outer circumferential wall 23 into a plurality of channels 201.

The outer circumferential wall 23 includes a circumferential wall extending in a set direction, whereby it is formed into a substantially tubular or cylindrical structure. The partition wall 24 may be connected to an inner circumferential surface of the outer circumferential wall 23 to partition the space enclosed by the outer circumferential wall 23. The number of the formed channels 201 and structural strength of the reinforcement member 20 may be adjusted as needed by adjusting the number of the partition walls 24. The more the partition walls 24, the higher the strength and the smaller the area of the channel 201. The partition wall 24 extends in a non-limited direction, and may extend in the up-down direction as shown in FIG. 10 or extend obliquely as shown in FIG. 11. A plurality of partition walls 24 may be parallel or non-parallel to each other, and may be spaced apart from or connected to each other. For example, the plurality of partition walls 24 shown in FIG. 10 are parallel to and spaced apart from each other, making the simpler structure. For example, the plurality of partition walls 24 shown in FIG. 11 extend obliquely, so that two adjacent partition walls 24 are connected to form a sawtooth shape, resulting in a better effect of improving the structural strength.

The reinforcement member 20 formed by matching of the outer circumferential wall 23 and the partition wall 24 has high pressure resistance, resulting in a better effect of enhancing the structural strength of the battery cooling plate 100, and simple molding, which is advantageous to reducing the production cost of the reinforcement member 20.

In some embodiments, the reinforcement member 20 matches the wall surface of the flow channel 101 through surface contact. The surface contact means that a contact region between the reinforcement member 20 and the wall surface of the flow channel 101 is a surface, rather than point contact or line contact. A contact surface may be in any shape such as a flat surface or a curved surface.

As the reinforcement member 20 matches the wall surface of the flow channel 101 through surface contact, on the one hand, connection strength and support stability between the reinforcement member 20 and the plate body 10 may be improved, resulting in a better effect of enhancing the structural strength of the battery cooling plate 100; and on the other hand, heat exchange between the reinforcement member 20 and the plate body 10 may be enhanced, thereby improving the heat exchange efficiency.

For example, in some embodiments including the connection portion 21, the connection portion 21 may be a flat plate and in surface contact with the wall surface of the flow channel 101. In some embodiments including the circumferential wall 23, a part of an outer surface of the circumferential wall 23 may be a flat surface and in surface contact with the wall surface of the flow channel 101.

In this embodiment of the present application, the entire reinforcement member 20 may be a part of one material, or may be composed of a plurality of different materials.

In some embodiments in which the reinforcement member 20 is provided in the flow channel 101, the reinforcement member 20 may be of a corrosion-resistant material, or a corrosion-resistant material layer may be provided on a surface of the reinforcement member 20.

The corrosion-resistant material includes, but is not limited to, series 3 aluminum alloys, series 6 aluminum alloys, and the like. In some specific embodiments, a base material of the reinforcement member 20 is an iron or a steel material, and a corrosion-resistant material layer is provided on a surface of the base material. The surface of the reinforcement member 20 includes an outer surface and an inner surface of the channel 201.

The corrosion-resistant material is unlikely to react with the heat exchange medium, and the entire reinforcement member 20 is of the corrosion-resistant material or the corrosion-resistant material layer is provided on the surface thereof, so that the entire reinforcement member 20 or an exposed part thereof is unlikely to react with the heat exchange medium, which is advantageous to improving the service life of the reinforcement member 20 and the stability of structural reinforcement for the battery cooling plate 100.

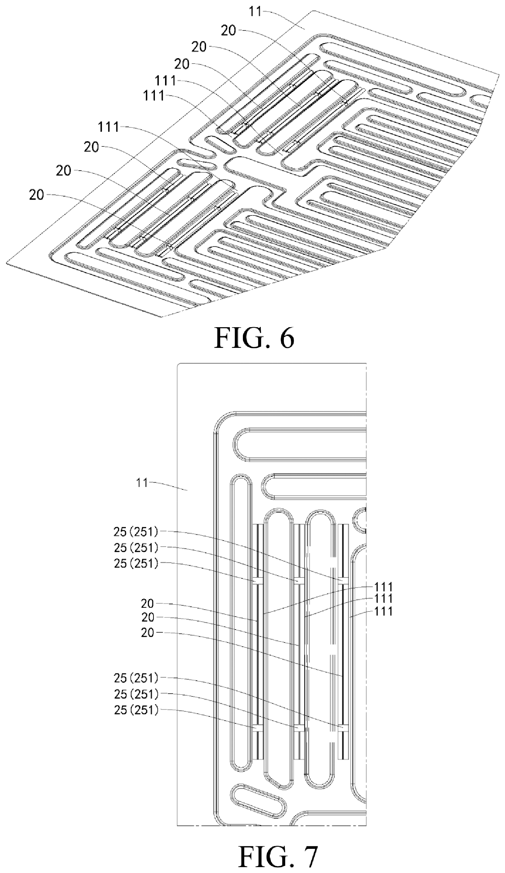

According to some embodiments of the present application, as shown in FIGS. 7-11, the reinforcement member 20 may include a first thinned region 25 connected to the wall surface of the flow channel 101.

The first thinned region 25 is a region in which a thickness of the reinforcement member 20 is less than a maximum thickness of the reinforcement member 20, where the thickness refers to a dimension in a direction perpendicular to the wall surface of the flow channel 101, for example, a dimension in the up-down direction.

By forming the first thinned region 25 and connecting the first thinned region 25 to the wall surface of the flow channel 101, the reinforcement member 20 can be connected to the wall surface of the flow channel 101 through the region with the small thickness, making the connection more convenient and firm. For example, in an embodiment in which the reinforcement member 20 is welded to the plate body 10, the first thinned region 25 can enhance strength of the welding, thereby improving reliability of the connection.

In addition, in some embodiments in which the reinforcement member 20 is provided with the channel 201, with continued reference to FIGS. 7-11, the first thinned region 25 may be a notch groove 251 provided on the reinforcement member 20, the reinforcement member 20 has channels 201 on two sides of the notch groove 251, and the notch groove 251 is in communication with the channels 201 on the two sides.

The thickness of the reinforcement member 20 in the region where the notch groove 251 is located is reduced to form the first thinned region 25. For example, the notch groove 251 may be obtained by processing such as cutting on the reinforcement member 20, or the notch groove 251 may be obtained synchronously in a molding process. In an example shown in FIG. 9, the bent portion 22 may be cut off to form the notch groove 251, and a part of the connection portion 21 opposite a cut-off region is formed as the first thinned region 25. In an example shown in FIG. 10 and FIG. 11, a top wall of the outer circumferential wall 23, two side walls of the outer circumferential wall 23, and the partition wall 24 may be cut off to form the notch groove 251, and a part of a bottom wall of the outer circumferential wall 23 opposite a cut-off region is formed as the first thinned region 25.

The notch groove 251 may allow circulation of the heat exchange medium and is in communication with the channels 201 on the two sides, so that the first thinned region 25 for connecting to the plate body 10 does not disturb the flow of the heat exchange medium, which is advantageous to improving the heat exchange efficiency.

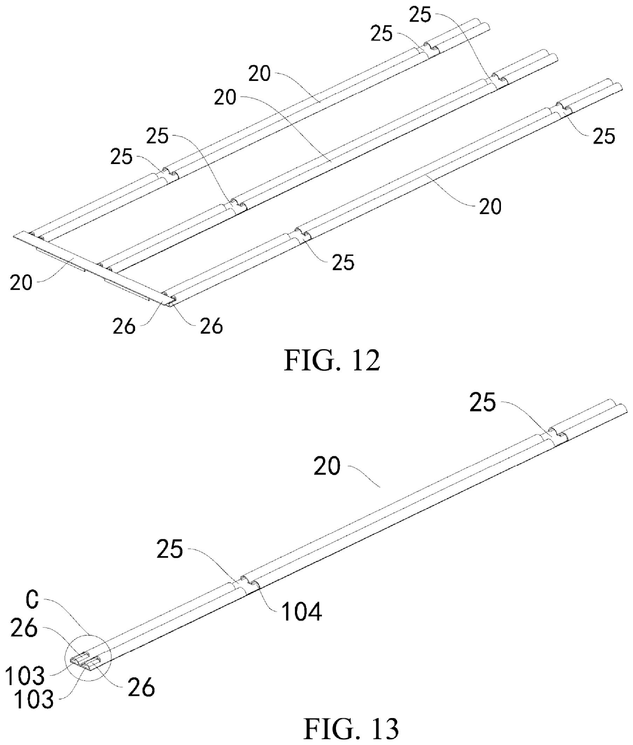

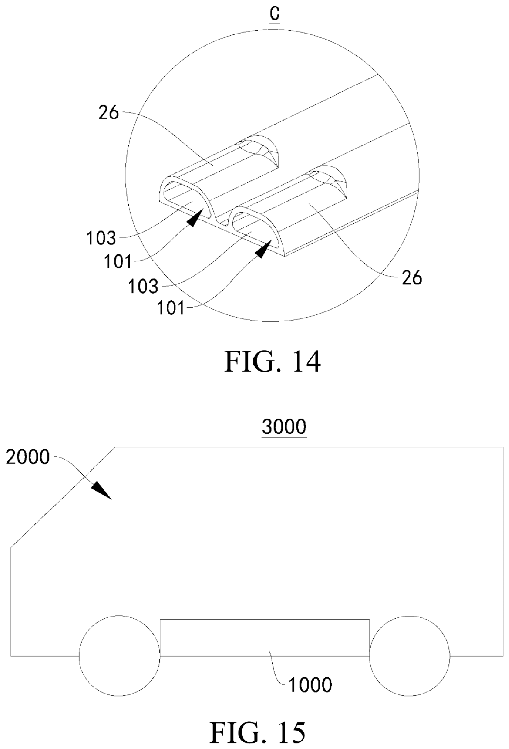

In some embodiments, as shown in FIGS. 12-14, FIG. 12 is a schematic structural diagram of stacked reinforcement members 20 according to an embodiment of the present application; FIG. 13 is a schematic structural diagram of one of the reinforcement members 20 in FIG. 12; and FIG. 14 is an enlarged schematic structural diagram of a portion C shown by a circle in FIG. 13. There are a plurality of reinforcement members 20, at least two reinforcement members 20 each include a second thinned region 26, and the second thinned regions 26 of the two reinforcement members 20 are stacked.

The second thinned region 26 is a region in which an overall height of the reinforcement member 20 is less than a maximum height of the reinforcement member 20.

The second thinned regions 26 of the two reinforcement members 20 are stacked, that is, extension directions of the two reinforcement members 20 intersect and the two reinforcement members 20 overlap each other, making overall structural strength of the plurality of reinforcement members 20 stronger, resulting in a better effect of enhancing the structural strength of the battery cooling plate 100.

Moreover, by stacking the second thinned regions 26, an overall height of an overlap region of the two reinforcement members 20 may be reduced, so that the overlap region occupies a space more reasonably and thus is unlikely to interfere with other structures. For example, in an embodiment in which the reinforcement member 20 is provided in the flow channel 101, the second thinned region 26 enables the height of the overlap region to be equal or close to a height of a non-thinned region of the reinforcement member 20, to adapt to a limitation on the space of the flow channel 101, so that the overlap region is unlikely to block the flow channel 101.

In addition, in some embodiments in which the reinforcement member 20 is provided with the channel 201, as shown in FIGS. 12-14, the channel 201 may be partially located in the second thinned region 26, so that the second thinned region 26 does not block the circulation of the heat exchange medium in the channel 201, making the heat exchange medium inside the reinforcement member 20 flow smoothly.

For example, in some specific embodiments, as shown in FIGS. 12-14, the channel 201 may include a first segment 103 and a second segment 104, where the first segment 103 is located in the second thinned region 26, and the second segment 104 is in communication with the first segment 103. A circulation area of the second segment 104 is greater than a circulation area of the first segment 103.

Therefore, the first segment 103 has a smaller circulation area to match a smaller height of the second thinned region 26. The second segment 104 has a larger circulation area to better match a larger height of the non-thinned region, increase the flow of the heat exchange medium, and improve the support and reinforcement effects on the plate body 10. Moreover, the first segment 103 is in communication with the second segment 104 so that the channel 201 in the reinforcement member 20 is continuous and free from impacts of another overlapping reinforcement member 20, making the heat exchange medium inside the reinforcement member 20 flow smoothly.

In some specific embodiments, the second thinned region 26 may be obtained by flattening the reinforcement member 20, and the first segment 103 with a smaller circulation area is formed at the same time, making a processing process simple. In addition, after the flattening, a facet may be formed in the second thinned region 26, which may be used as a matching surface for the second thinned region 26 of another reinforcement member 20, making the connection between the two reinforcement members 20 more stable.

A chemical compartment 1000 of a vehicle body 2000 according to a second aspect of the embodiments of the present application includes the battery cooling plate 100 according to the above embodiment. Therefore, with the use of the battery cooling plate 100 described above, at least the strength of the region on the plate body 10 where the flow channel 101 is located is enhanced by the reinforcement member 20, so as to improve overall impact resistance performance of the battery cooling plate 100, reducing the risk of plastic deformation of the region on the battery cooling plate 100 where the flow channel 101 is located and the risk of collapse of the flow channel 101, thereby improving the stability of a heat management function of a chemical compartment 1000.

A vehicle body 2000 according to a third aspect of the embodiments of the present application includes the chemical compartment 1000 of the vehicle body 2000 according to the above embodiment of the present application. Therefore, with the use of the chemical compartment 1000 of the vehicle body 2000 described above, at least the strength of the region on the plate body 10 where the flow channel 101 is located is enhanced by the reinforcement member 20, so as to improve overall impact resistance performance of the battery cooling plate 100, reducing the risk of plastic deformation of the region on the battery cooling plate 100 where the flow channel 101 is located and the risk of collapse of the flow channel 101, thereby improving the stability of a heat management function of a chemical compartment 1000.

In some embodiments, as shown in FIG. 15, the battery cooling plate 100 is a floor of the vehicle body 2000. Therefore, the battery cooling plate 100 is not only used for heat management of the chemical compartment 1000, but also used as the floor of a passenger compartment, which is advantageous to reducing the number of components and parts of a vehicle 3000, thereby reducing an occupied space and providing a larger space for mounting a battery cell in the chemical compartment 1000, which is advantageous to improving the energy density. In addition, the battery cooling plate 100 includes the reinforcement member 20 for enhancing the strength, so that the battery cooling plate 100, when used as the floor of the passenger compartment, is not prone to the decline or loss of the heat management function due to an impact such as stepping from a foot or hitting by an object, thereby improving the service life and use experience of the vehicle 3000.

As shown in FIG. 15, a vehicle 3000 according to a fourth aspect of the embodiments of the present application includes the vehicle body 2000 according to the above embodiment of the present application. Therefore, with the use of the vehicle body 2000 described above, at least the strength of the region on the plate body 10 where the flow channel 101 is located is enhanced by the reinforcement member 20, so as to improve overall impact resistance performance of the battery cooling plate 100, reducing the risk of plastic deformation of the region on the battery cooling plate 100 where the flow channel 101 is located and the risk of collapse of the flow channel 101, thereby improving the stability of a heat management function of a chemical compartment 1000.

The chemical compartment 1000 may be used to supply power to the vehicle 3000, for example, the chemical compartment 1000 may be used as an operating power supply of the vehicle 3000. The vehicle 3000 may further include a controller and a motor, where the controller is used to control the chemical compartment 1000 to supply power to the motor, for example, a demand of working power of the vehicle 3000 during starting, navigating, and driving.

A battery cooling plate 100, a chemical compartment 1000 having the battery cooling plate, and a vehicle 3000 having the chemical compartment 1000 according to some specific embodiments of the present application are described below with reference to the drawings.

As shown in FIGS. 1-15, the vehicle 3000 includes the vehicle body 2000, and the vehicle body 2000 includes an upper vehicle body and a lower vehicle body, where the lower vehicle body includes a front compartment assembly, the chemical compartment 1000, and a rear floor assembly, an upper cover of the chemical compartment 1000 is the battery cooling plate 100, a battery cell in the chemical compartment 1000 is arranged in an inverted manner, that is, an electric connection portion of the battery cell faces downward, and the battery cooling plate 100 may be adhered to a heat dissipation surface of the battery cell. After the lower vehicle body and the upper vehicle body are jointed together, the battery cooling plate 100 may be used as a floor of a passenger compartment, components such as a central armrest box, a front seat, and a rear seat cushion may be provided above the battery cooling plate 100, and a region where no components or parts are mounted is a region for foot stepping and easily hit by a heavy object, that is, a to-be-impacted region 102.

The battery cooling plate 100 includes a first plate body 11, a second plate body 12, and a plurality of reinforcement members 20, where the first plate body 11 is a flow channel 101 plate and is provided with a flow channel 101 groove, the second plate body 12 is a heat dissipation plate and has a large part being a flat plate with a large area, and the second plate body 12 and the first plate body 11 are stacked in a thickness direction to cover a groove opening of the flow channel 101 groove, thereby forming the flow channel 101.

The reinforcement member 20 is provided in the flow channel 101, and a height of the reinforcement member 20 is less than or equal to a height of the flow channel 101. The reinforcement member 20 may be provided in the flow channel 101 of the to-be-impacted region 102, so as to enhance strength and prevent the flow channel 101 from collapsing, thereby avoiding a loss of a heat management function and reducing a decline of the heat management function. Certainly, the reinforcement member 20 may also be provided in the flow channel 101 opposite a low temperature region of the chemical compartment 1000 to play a role of enhancing heat exchange and changing a flow distribution of the heat exchange medium.

The plurality of reinforcement members 20 may be independent of each other, may be jointed for combined molding, or the like, and a manner of overlap combination includes welding, clamping, riveting, and the like. The reinforcement member 20 may be fixed by: first reliably fixing the reinforcement member 20 to the first plate body 11 and then brazing the first plate body 11 and the second plate body 12; first reliably fixing the reinforcement member 20 to the second plate body 12 and then brazing the first plate body 11 and the second plate body 12; or pre-assembling the reinforcement member 20, the first plate body 11, and the second plate body 12 and then performing brazing, where at least one surface of the reinforcement member 20 is welded to the first plate body 11 or the second plate body 12 with a flux during the brazing. The reinforcement member 20 may be fixed by welding, adhering, clamping, and the like. For example, the reinforcement member 20 has a first thinned region 25 used as a welding region to facilitate welding to the first plate body 11 or the second plate body 12, so that the reinforcement member 20 is reliably fixed to the first plate body 11 or the second plate body 12, preventing the reinforcement member 20 from moving or flipping in the flow channel 101.

The two reinforcement members 20 jointed to each other may have a second thinned region 26 formed by flattening, where the second thinned region 26 has a facet that may be used as an overlap and welding surface of the second thinned regions 26 of the two reinforcement members 20.

The reinforcement member 20 may be molded by extrusion molding, bending molding, press molding, 3D printing molding, and the like. Moreover, the reinforcement member 20 may have a shape with high pressure resistance and easy to mold, for example, the structure formed by the matching of the connection portion 21 and the plurality of bent portions 22 shown in FIG. 9, or the structure formed by the outer circumferential wall 23 and the plurality of partition walls 24 shown in FIGS. 10-11. The high pressure-resistance strength can improve the effect of preventing the flow channel 101 from collapsing, and the simple molding can reduce the production cost of the reinforcement member 20.

The plurality of reinforcement members 20 may be of the same material that is resistant to corrosion by the heat exchange medium, such as series 6 aluminum alloys, or may have a coating on a surface that is resistant to corrosion by the heat exchange medium.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A battery cooling plate, comprising:
a plate body provided with a flow channel for circulating a heat exchange medium; and
a reinforcement member connected to the plate body and at least configured to enhance strength of a region on the plate body where the flow channel is located.

2. The battery cooling plate according to claim 1, wherein the plate body comprises a to-be-impacted region, and the reinforcement member is correspondingly provided in the to-be-impacted region.

3. The battery cooling plate according to claim 1 or 2, wherein the reinforcement member is provided in the flow channel and connected to a wall surface of the flow channel.

4. The battery cooling plate according to claim 3, wherein the plate body comprises a first heat exchange region opposite a high temperature region of a chemical compartment and a second heat exchange region opposite a low temperature region of the chemical compartment, and the reinforcement member is provided in the flow channel of the second heat exchange region.

5. The battery cooling plate according to claim 3 or 4, wherein the flow channel extends in a set direction, and a dimension of the reinforcement member perpendicular to the set direction is less than or equal to a dimension of the flow channel perpendicular to the set direction.

6. The battery cooling plate according to any one of claims 3-5, wherein the flow channel extends in the set direction, and the reinforcement member has a channel passing through the reinforcement member in the set direction.

7. The battery cooling plate according to claim 6, wherein the reinforcement member comprises a connection portion and a plurality of bent portions, the plurality of bent portions are arranged perpendicular to the set direction, the bent portion is provided with a channel groove on a side facing to the connection portion, the connection portion covers a groove opening of the channel groove to define the channel, and the connection portion is connected to a wall surface of the flow channel.

8. The battery cooling plate according to claim 6 or 7, wherein the reinforcement member comprises an outer circumferential wall and a partition wall, and the partition wall is provided in a space enclosed by the outer circumferential wall to partition the space enclosed by the outer circumferential wall into a plurality of channels.

9. The battery cooling plate according to any one of claims 3-8, wherein the reinforcement member matches the wall surface of the flow channel through surface contact.

10. The battery cooling plate according to any one of claims 3-9, wherein the reinforcement member is of a corrosion-resistant material, or a corrosion-resistant material layer is provided on a surface of the reinforcement member.

11. The battery cooling plate according to any one of claims 3-10, wherein the reinforcement member comprises a first thinned region connected to the wall surface of the flow channel.

12. The battery cooling plate according to claim 11, wherein the first thinned region is a notch groove provided on the reinforcement member, the reinforcement member has channels on two sides of the notch groove, and the notch groove is in communication with the channels on the two sides.

13. The battery cooling plate according to any one of claims 3 to 12, wherein there are a plurality of reinforcement members, at least two reinforcement members each comprise a second thinned region, and the second thinned regions of the two reinforcement members are stacked.

14. The battery cooling plate according to claim 13, wherein the reinforcement member has a channel partially located in the second thinned region.

15. The battery cooling plate according to any one of claims 1-14, wherein the plate body comprises a first plate body and a second plate body, the first plate body is provided with a groove on a side facing to the second plate body, the second plate body covers a groove opening of the groove to define the flow channel, and the reinforcement member is connected to the first plate body or the second plate body.

16. A chemical compartment of a vehicle body, comprising the battery cooling plate according to any one of claims 1-15.

17. A vehicle body, comprising the chemical compartment of a vehicle body according to claim 16.

18. The vehicle body according to claim 17, wherein the battery cooling plate is a floor of the vehicle body.

19. A vehicle, comprising the vehicle body according to claim 17 or 18.
